# EUROPEAN PATENT SPECIFICATION

(11) **EP 0 778 179 B1**
(45) Date of publication and mention of the grant of the patent: **11.02.2004**
(21) Application number: 96118282.1
(22) Date of filing: 14.11.1996
(51) Int. Cl.: B60R 16/02

(54) **Multiplex communication system**
Multiplexiertes Kommunikationssystem
Système de communication multiplexé

(30) Priority: 20.11.1995 JP 30161395
(43) Date of publication of application: 11.06.1997
(73) Proprietor: ALPS ELECTRIC CO., LTD., Ota-ku Tokyo 145 (JP)
(72) Inventor: Mizuta, Ken, Toda-gun, Miyagi-ken (JP); Shibazaki, Ken, Furukawa-shi, Miyagi-ken (JP); Miura, Yukio, Furukawa-shi, Miyagi-ken (JP)
(74) Representative: Klunker . Schmitt-Nilson . Hirsch

(56) References cited:
- EP-A- 0 396 090
- EP-A- 0 424 907
- EP-A- 0 511 794
- US-A- 4 534 025
- US-A- 5 363 405
- US-A- 5 436 897

## Description

### BACKGROUND OF THE INVENTION

### 1. Field of the Invention

The present invention relates to a multiplex communication system, and in particular to a multiplex communication system that can efficiently perform the mutual transmission or reception of plural-bit data between a number of transmitter-receivers. Such a multiplex communication system is adapted for collecting the status information of operational equipment installed in automobiles and for controlling the equipment.

### 2. Description of the Related Art

In general, communication systems installed in automobiles are widely used to transmit or receive data for collecting status information of equipment installed in automobiles and for controlling the equipment. These types of conventional communication systems include one bus, a plurality of nodes connected to this bus, and actuators mounted on the respective nodes. Message data which is mutually transmitted or received by the respective nodes contains data for controlling the actuator and additional address data identifying its transmitter and receiver, and is cyclically transmitted on the bus. Such conventional communication systems utilize signal processing methods such as NRZ (non-return to zero) .

Recently, the number of electrical apparatuses installed in automobiles is tending to increase, and data that passes through the bus constituting the communication system is increasing. In accordance with the above-mentioned related art, message data is cyclically transmitted, and modulated pulse data and NRZ are used as signalling systems. The use of NRZ often results in a problem in which a shift occurs during synchronization of the signals. The use of modulated pulse data can solve such a problem, however its use often raises another problem in which high-speed signal transmission is difficult to maintain because the method uses only portions of transmission pulses to cause loss of pulse durations.

These problems makes it difficult to improve the reliability of the overall communication system. As a data processing load increases, delays caused by signal-overloaded data processing also increase. In particular, in data processing which requires security and high speed, such as processing for engine diagnosis systems, throttle sensors and so forth, if data transmission reliability is low, the processing needs to be repeated until accurate data processing can be performed, and as a result, various troubles caused by the delays of the data processing occur.

US-A-5,363,405 discloses'a multiplex communication system (in accordance with the pre-characterizing part of claim 2), wherein the data converting portion receives sensor or switch signals of measurands (e.g. pressure, temperature, etc.). The reference does not disclose the nature of such signals.

EP-A-0 511 794 discloses a similar multiplex communication system used to transmit audio signals. As far as control signals are concerned, the specific nature of these signals is not disclosed in this document.

Specifically, the data transmitted via a bus connecting master nodes and slave nodes is not a modulated pulse signal in the sense of claim 1 or 2.

### SUMMARY OF THE INVENTION

Accordingly, to solve the above-mentioned problems, it is an object of the present invention to provide a multiplex communication system capable of readily synchronizing transmission data bits, and of performing high-speed data transmission. When such a multiplex communication system is used to control automobile-installed equipment, the system exhibits no delay in control processing and high reliability.

The aspects of the present invention, are achieved by the features of claim 1 or 2.

In accordance with the present invention, each node includes the SPI for transmitting or receiving a data signal with the exterior, the data converting portion for converting control data generated in accordance with an input signal into said modulated pulse data, a data transmitting portion for transmitting the VPWM-data to the bus in predetermined units, a data receiving portion for receiving said modulated pulse data transmitted to the bus, and the data inverting portion for inverting the modulated pulse data into the original control data. Therefore, the multiplex communication system can perform mutual data transmission between the nodes, so that high speed data transmission can be performed with high reliability. In particular, when the system is used in a automobile, it prevents delay in control processing of automobile-installed equipment and can perform high reliability control. BRIEF DESCRIPTION OF THE DRAWINGS
Fig. 1 is a block diagram showing a multiplex communication system according to an embodiment of the present invention.
Fig. 2 is a block diagram showing the master node in the multiplex communication system.
Fig. 3 is a block diagram showing a slave node in the multiplex communication system.
Fig. 4 is an explanatory chart showing VPWM-data transmitted to a bus in the multiplex communication system.

### DESCRIPTION OF THE PREFERRED EMBODIMENTS

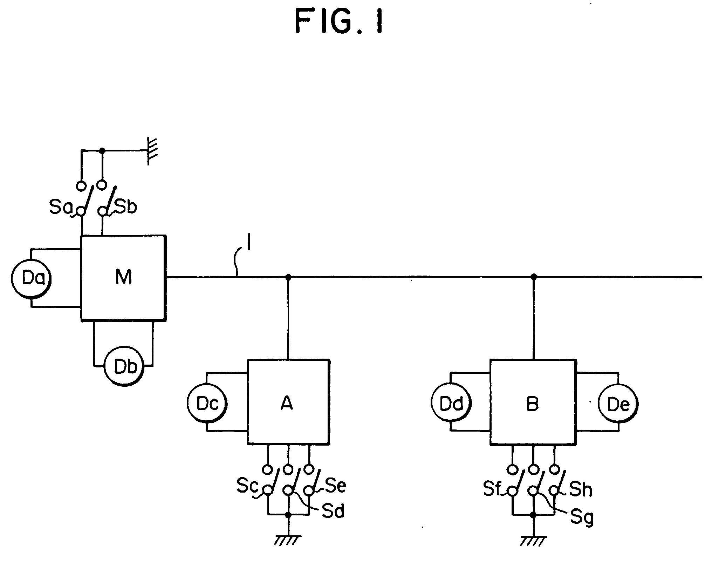

As shown in Fig. 1, a multiplex communication system according to an embodiment of the present invention has one common bus 1, a master node M connected thereto for determining the transmission timing of all message data in the communication system, and a plurality of slave nodes A and B connected to the bus 1. When such a multiplex communication system is installed in a automobile for controlling automobile-installed equipment, the master node M includes, for example, sensors for detecting the status of doors and windows which serve as peripheral equipment in the driver's cab, switches Sa and Sb showing the status of switches used for opening or closing the windows and actuators Da and Db for a door-lock motor, a power-window motor and so forth. The master node M transmits control data to the bus 1, according to its necessity, after collecting the status of the switches, so that the master node M controls the actuators Da and Db. Similar to the master node M, the slave nodes A and B collect data, transmit control data, and control actuators Dc, or Dd and De, with respect to, for example, peripheral equipment such as a front passenger's seat and rear seats.

The master node M and the slave nodes A and B include CPUs, which are not shown. The master node M has the initiative of the transmission timing in transmitting message data on the bus 1. The master node M controls message data transmitted to the bus 1 from other slave nodes and the master node M itself, by using a built-in CPU clock timer so that the message data are transmitted at predetermined timing and a predetermined cycle. The master node M and the respective nodes A and B control necessary equipment such as actuators by transmitting message data and receiving message data from other nodes at the predetermined timing and cycle.

Control of transmission timing in transmission performed by the master node M is not a subject matter of the present invention, and has been already proposed in JP-A-950001952. Accordingly, the description of such control will be omitted in this specification.

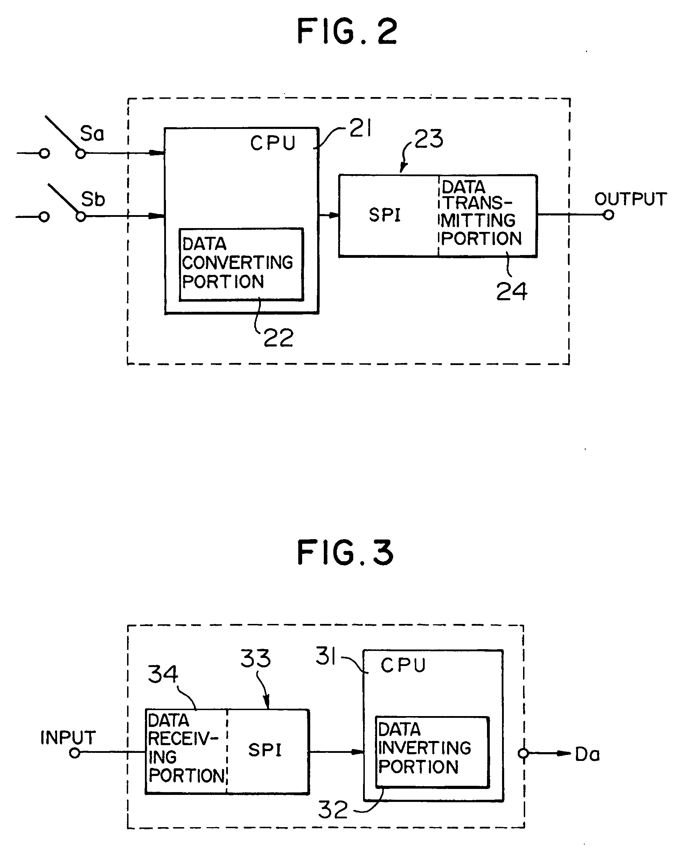

The master node M includes a CPU 21, a data converting portion 22, and a data transmitting portion 24 included in part of an SPI 23, as shown in Fig. 2. This CPU 21 controls the interior of the master node M and timing for the overall system. The CPU 21 takes in the on-status and off-status of the switches Sa and Sb from its input terminals, and inputs control data, which is expressed as bits "1" and "0" in the NRZ-form, to the data converting portion 22.

The data converting portion 22 converts this control data into SPI-data and further into modulated pulse data by using software. The SPI 23 takes in the modulated pulse data from the data software. The SPI 23 takes in the modulated pulse data from the data converting portion 22 and supplies it to the data transmitting portion 24.

The data transmitting portion 24 transmits the inputted VPWM-data from its output terminal to the bus 1. When starting the first transmission, the data transmitting portion 24 transmits the modulated pulse data as first transmission data in predetermined units, for example, in the 8-bit frame unit, and subsequently transmits successive modulated pulse data to the bus 1.

The slave nodes A and B each have a CPU 31, a data inverting portion 32, an SPI 33, and a data receiving portion 34 inside the SPI 34, as shown in Fig. 3. This CPU 31 controls the whole of the slave node. This data receiving portion 34 receives the modulated pulse data from the bus 1 through its input terminal.

Subsequently, the SPI 34 controls the modulated pulse data, supplied to the data inverting portion 32, in predetermined units, for example, in the 8-bit frame unit. The data inverting portion 32 receives the modulated pulse data from the SPI 33, and converts the received modulated pulse data into SPI-data and further into control data in the NRZ-form by using software. The data inverting portion 32 converts the modulated pulse data into the original control data. The control data converted from the modulated pulse data is used for the CPU 31 to control the actuators Da to De.

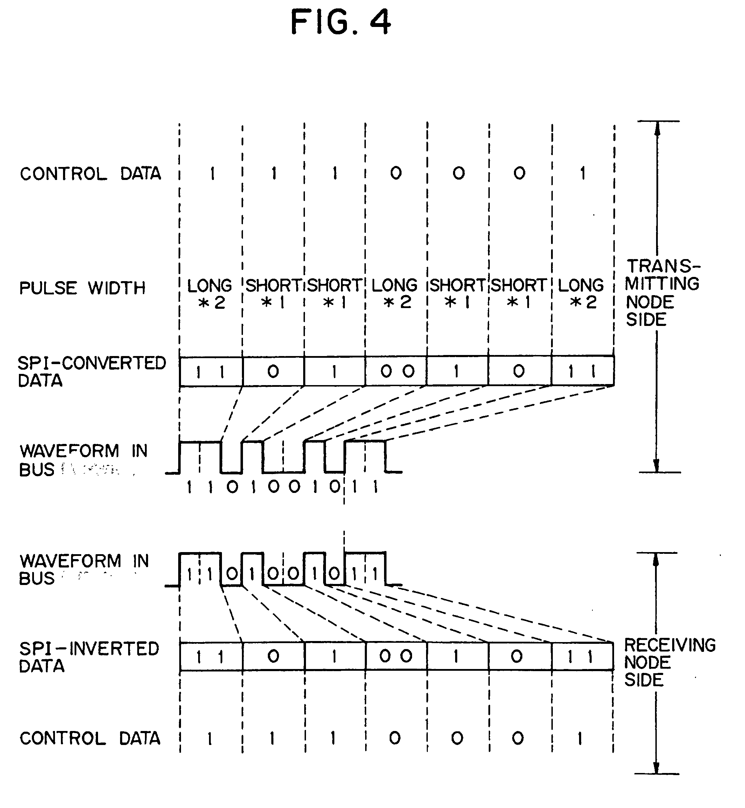

In the above-described multiplex communication system according to the embodiment of the present invention, modulated pulse data is transmitted on the bus 1. As shown in Fig. 4, bits of control data change from "1" to "0" or change reversely, pulses corresponding to the control data have a double pulse width compared with normal. When bits of control data continue as the same bit pattern of "1" or "0", pulses corresponding to the control data have a short pulse width, namely, a normal pulse width. The pulses have regularity in which each one bit of the control data is inverted.

As shown in Fig. 4, the control data is converted in the data converting portion 22. The bits of the control data, which have changed from "0" to "1" and "1" to "0", are converted into the corresponding SPI-conversion data string so that a pulse width is twice than a normal pulse width, in other words, the bits are converted into "(1, 1)" and "(0, 0)". Data "(1, 1)" is formed after the conversion of the first bit "1" of the control data because it is determined that a change has occurred in the bit of the control data since bit "0" is set to control data just before the first "1", which change is not shown.

Bits of the control data, which continue as the same bit pattern of "1, 1, 1" and "0, 0, 0", are converted into the corresponding SPI-conversion data string so that the SPI-conversion data has a short pulse width, namely, a normal pulse width, and so that every bit is inverted in the 1-bit unit, in other words, the bits are converted into "1, 0, 1" and "0, 1, 0". Since a bit just before the first bit of the same bit patterns that continue has changed, the control data are converted into "(1, 1), 0, 1" and "(0, 0), 1, 0".

Whether a control data bit is "1" or "0" after the conversion so that a pulse width is enlarged is not related to the type of the control data bits, and takes a form in which a bit just before the control data bit is inverted.

As shown in Fig. 4, the control data converted into the SPI-conversion data is further converted into modulated pulse data, and the modulated pulse data is outputted to the SPI 22 from the data converting portion 32. The SPI 22 controls the modulated pulse data to be transmitted in the 8-bit unit to the bus 1.

In the receiving side the modulated pulse data is converted by the data inverting portion 32 into SPI-inversion data and further into control data for controlling the actuators and so forth, and as a result, the original data as same as in the transmitting side is restored.

In other words, the SPI 33 controls the reception of the VPWM-data so as to be received in the 8-bit unit. As shown in Fig. 4, the first bits "1, 1" of the modulated pulse data in the SPI-inversion data string have a double pulse width compared with normal, and therefore it is determined that a change has occurred based on a control data bit just before the first bits, and in the SPI-inversion data string the first bits become "(1, 1)". Successive bits "0, 1" have a normal pulse width, thus, it is determined that the same bit pattern follows. Further successive bits "0, 0" have a double pulse width compared with normal, and therefore it is determined that a change has occurred based on a control data bit just before the successive bits.

As represented by the SPI-inversion data string shown in Fig. 4, the modulated pulse data is the form of a 1-bit unit inverted pattern, thus, in the SPI-inversion data string, "(1, 1)" are converted into "1", "0" and "1" are respectively converted into "1", and "0, 0" are converted into "0", so that the modulated pulse data is restored into the control data.

In this embodiment the conversion from the control data into the SPI-inversion data and further into the modulated pulse data and the reversed conversion are controlled by the software, however may be controlled by hardware.

Fig. 4 shows one embodiment of the present invention, in other words, it shows a portion of the control data consisting of successive frames in predetermined units (8-bit unit frames shown in Fig. 4).

In accordance with the above-described conversion rule, for example, when the waveform of the control data is expressed as "1, 1, 1, 0, 0, 0, 1, ...", the corresponding SPI-inversion data is expressed as "(1, 1), 0, 1, (0, 0), 1, 0, (1, 1), ...". Among these data, data "(1, 1) and (0, 0)" become the modulated pulse data, shown in Fig. 4, having a double pulse width. The description of the inversion will be omitted because data processing as same as in the conversion is performed.

In general, in the modulated pulse data the wave level always changes from high to low or from low to high between adjacent bits. The modulated pulse data utilizes a relationship in which both a high level having a pulse width and a low level having a double pulse width form bit "1", while both a low level having a pulse width and a high level having a double pulse width form bit "0" (or utilizes the reverse relationship).

The modulated pulse data used in the present invention is similar to the modulated pulse data with respect to a change in the wave level between adjacent bits, however, the discrimination between bit "1" and bit "0" is performed based on a different rule. The data waveform seemingly becomes the waveform of the modulated pulse data, and can be easily synchronized when the data is transmitted or received and can be transmitted at high speed, similar to the modulated pulse data. In addition, since the system performs data conversion processing by using a NRZ-device in the converting portion, the system can perform effective data transmission or reception which can be easily synchronized, without using an expensive, complicated device used only for the modulated pulse data.

As the control data in the multiplex communication system installed in a automobile, the same bit pattern frequently continues normally, and there are few cases in which the bits change, thus, the data transmission rate is not affected by the rule in which the pulse has a double width when the modulated pulse data changes, in proportional to time.

It is extremely easy to synchronize the modulated pulse data bits, compared with NRZ. Compared with transmitting the same bit pattern in another method, for example, in the modulated pulse method, the modulated pulse data can be transmitted at high speed.

Accordingly, in this embodiment of the present invention the multiplex communication system using the VPWM-data for transmission can advantageously perform effective data transmission with high reliability without irregularity in bit synchronizing. In particular, when the system is used in a automobile-engine diagnosis system that requires security and high-speed, and in data processing with respect to a throttle sensor and so forth, the system can firmly process, in a first stage, data that is transmitted or received.

In the above embodiment the system in which the present invention is applied to a automobile for controlling automobile-installed equipment has been described, however, it does not need to be said that the present invention can be applied to message transmission.

Also in the above embodiment the structure and operation of both the master node serving as a data transmitter and the slave node serving as a data receiver have been described. However, in accordance with the present invention, both the structure of the master node shown in Fig. 2 and the structure of the slave node shown in Fig. 3 may be formed as one node. In this case messages and so forth can be mutually transmitted or received between nodes. In addition, by setting the master node, transmission timing in data transmission can be controlled.

Further in the above embodiment the system that includes the master node M and the slave nodes A and B both connected to the bus 1 has been described with respect to its operation, as an example. In accordance with the present invention, a system that includes more slave nodes connected to the bus can operate.

In the above embodiment the system in which the master node M has a predetermined initiative in determining the transmission timing of message data from the respective nodes to the bus has been described. Further in the present invention the master node M can be optionally determined. Also, when the master node that is operating develops trouble, one of other slave nodes can be optionally operated as the master node. For such a use, conditions for the master node, such as the status of other nodes, may be programmed in each node.

Although the master node M controls the timing of data transmission of the whole system in the above embodiment, the present invention can be applied to communication systems using any communication protocols.

## Claims

1. A multiplex communication system having a master node (M) and at least one slave node (A, B), including central processing units (21, 31), both being connected to a bus (1),
wherein said master node (M) includes:
a serial peripheral interface (23) for transmitting or receiving a data signal with the exterior;
a data converting portion (22) for converting control data generated in accordance with an input signal into modulated pulse data to be input to said serial peripheral interface; and
a data transmitting portion (24) for transmitting said modulated pulse data from said serial peripheral interface (23) to said bus (1) in predetermined units,
and wherein said slave node (A, B) includes:
a serial peripheral interface (33) for transmitting or receiving data signal with the exterior;
a receiving portion (34) for receiving said modulated pulse data transmitted to said bus (1); and
a data inverting portion (32) for inverting said modulated pulse data into the original control data, **characterized in that** said control data is a non-return to zero (NRZ) data and said modulated pulse data is made from control data such that is becomes a
pulse having long pulse width in a case where a control signal changes from "1" to "0" or vice versa, and such that in a case where a bit string of the control signal is continuous as the bit pattern of "1" or "0", it becomes a pulse having a short pulse width and further it becomes a row of pulses reversed for every one bit of the original control signal.

2. A multiplex communication system in which a plurality of nodes (M, A, B) having central processing units (21, 31) are connected to a bus (1) and one of the nodes is used as the master node, while the other nodes are used as slave nodes,
wherein said plurality of nodes (M, A, B) including the master node each include:
a serial peripheral interface (23, 33) for transmitting or receiving a data signal with the exterior;
a data converting portion (22) for converting control data generated in accordance with an input signal into modulated pulse data (VPWM) to be inputted to said serial peripheral interface (23, 33);
a data transmitting portion (24) for transmitting said modulated pulse data to said bus (1) in predetermined units;
a data receiving portion (34) for receiving said modulated pulse data transmitted to said bus (1); and
a data inverting portion (32) for inverting said modulated pulse data into the original control data,
**characterized in that** said control data is a non-return to zero (NRZ) data and said modulated pulse data is made from control data such that is becomes a pulse having long pulse width in a case where a control signal changes from "1" to "0" or vice versa, and such that in a case where a bit string of the control signal is continuous as the bit pattern of "1" or "0", it becomes a pulse having a short pulse width and further it becomes a row of pulses reversed for every one bit of the original control signal.

3. A system as defined in claim 1 or 2, wherein the long pulse width is twice the short pulse width.

## Patentansprüche

1. Multiplex-Kommunikationssystem, umfassend einen Master-Knoten (M) und mindestens einen Slave-Knoten (A, B), enthaltend zentrale Verarbeitungseinheiten (22, 31), beide an einen Bus (1) angeschlossen,
wobei der Masterknoten (M) beinhaltet:
eine serielle periphere Schnittstelle (23) zum Senden oder zum Empfangen eines Datensignals nach bzw. von außen,
einen Datenumwandlungsteil (22) zum Umwandeln von Steuerdaten, die gemäß einem Eingangssignal erzeugt werden, in modulierte Impulsdaten für die Eingabe in die serielle periphere Schnittstelle; und
einen Datensendeteil (24) zum Senden der modulierten Impulsdaten von der seriellen peripheren Schnittstelle (23) in vorbestimmten Einheiten an den Bus (1),
und wobei der Slave-Knoten (A, B) beinhaltet:
eine serielle periphere Schnittstelle (33) zum Senden oder zum Empfangen eines Datensignals nach bzw. von außen;
einen Empfangsteil (34) zum Empfangen der modulierten Impulsdaten, die auf den Bus (1 ) gesendet werden; und
einen Dateninvertierteil (32) zum Invertieren der modulierten Impulsdaten in die ursprünglichen Steuerdaten, **dadurch gekennzeichnet, dass** die Steuerdaten Non-Return-To-Zero-Daten (NRZ-Daten) sind, und dass die modulierten Impulsdaten aus Steuerdaten derart gebildet werden, dass sie zu einem Impuls mit einer großen Impulsbreite werden, falls ein Steuersignal von "1" auf "0" wechselt oder umgekehrt, und derart, dass im Fall einer kontinuierlichen Bitkette des Steuersignals aus dem Bitmuster "1" oder "0" ein Impuls mit kurzer Impulsbreite gebildet wird, und weiterhin zu einer Impulsreihe wird, die bei jedem Bit des ursprünglichen Steuersignals umgekehrt wird.

2. Multiplex-Kommunikationssystem, bei dem mehrere Knoten (M, A, B) mit zentralen Verarbeitungseinheiten (21, 31) an einem Bus (1) angeschlossen sind und einer der Knoten als Masterknoten fungiert, während die übrigen Knoten als Slave-Knoten fungieren,
wobei die mehreren Knoten (M, A, B), die den Masterknoten beinhalten, jeweils enthalten:
eine serielle periphere Schnittstelle (23, 33) zum Senden oder Empfangen eines Datensignals nach bzw. von außen;
einen Datenumwandlungsteil (22) zum Umwandeln von entsprechend einem Eingangssignal generierten Steuerdaten in modulierte Impulsdaten (VPWM) für die Eingabe in die serielle periphere Schnittstelle (23, 33);
einen Datenübertragungsteil (24) zum Senden der modulierten Impulsdaten in vorbestimmten Einheiten auf den Bus (1);
einen Datenempfangsteil (34) zum Empfangen der auf den Bus (1) übertragenen modulierten Impulsdaten; und
einen Dateninvertierteil (32) zum Invertieren der modulierten Impulsdaten zu den ursprünglichen Steuerdaten,
**dadurch gekennzeichnet, dass** die Steuerdaten Non-Return-To-Zero-Daten (NRZ-Daten) sind, und die modulierten Impulsdaten gebildet werden aus Steuerdaten in der Weise, dass sie zu einem Impuls mit großer Impulsbreite dann werden, wenn ein Steuersignal von "1" auf "0" wechselt oder umgekehrt, und im Fall einer Bitkette des Steuersignals in Form eines kontinuierlichen Bitmusters aus "1" oder "0" zu einem Impuls mit kurzer Impulsbreite werden und weiterhin zu einer Reihe von Impulsen werden, bei denen jedes Bit des ursprünglichen Steuersignals umgekehrt ist.

3. System nach Anspruch 1 oder 2, bei dem die große Impulsbreite doppelt so lang ist wie die kurze Impulsbreite.

## Revendications

1. Système de communication multiplexé avec un noeud maître (M) et au moins un noeud esclave (A, B), comprenant des unités centrales de traitement (21, 31), les deux étant raccordées à un bus (1),
dans lequel ledit noeud maître (M) comprend :
une interface série de périphérique (23) pour transmettre ou recevoir un signal de données avec l'extérieur ;
une portion de conversion de données (22) pour convertir des données de contrôle, générées en fonction d'un signal d'entrée, en données impulsionnelle modulées devant être entrées dans ladite interface série de périphérique ; et
une portion de transmission de données (24) pour transmettre lesdites données impulsionnelles modulées depuis ladite interface série de périphérique (23) audit bus (1) en unités prédéterminées ;
et dans lequel ledit noeud esclave (A, B) comprend :
une interface série de périphérique (33) pour transmettre ou recevoir un signal de données avec l'extérieur ;
une portion de réception (34) pour recevoir lesdites données impulsionnelles modulées transmises audit bus (1) ; et
une portion d'inversion de données (32) pour inverser lesdites données impulsionnelles modulées en données de contrôle originales,
**caractérisé en ce que** lesdites données de contrôle sont des données codées selon la méthode de non-retour à zéro (NRZ) et lesdites données impulsionnelles modulées sont obtenues à partir des données de contrôle de telle sorte qu'elles deviennent une impulsion ayant une longue largeur d'impulsion dans le cas où un signal de contrôle passe de « 1 » à « 0 » ou inversement, et de telle sorte que, dans le cas où une chaîne de bits du signal de contrôle est continue comme la configuration binaire de « 1 » ou « 0 », elle devienne une impulsion ayant une largeur d'impulsion courte et qu'en outre elle devienne une rangée d'impulsions inversées à chaque bit du signal de contrôle original.

2. Système de communication multiplexé dans lequel une pluralité de noeuds (M, A, B) comprenant des unités centrales de traitement (21, 31) sont raccordés à un bus (1) et un des noeuds est utilisé comme noeud maître, tandis que les autres noeuds sont utilisés comme noeuds esclaves,
dans lequel chaque noeud de ladite pluralité de noeuds (M, A, B), y compris le noeud maître, comprend :
une interface série de périphérique (23, 33) pour transmettre ou recevoir un signal de données avec l'extérieur ;
une portion de conversion de données (22) pour convertir les données de contrôle, générées en fonction d'un signal d'entrée, en données impulsionnelles modulées (VPWM) devant être entrées dans ladite interface série de périphérique (23, 33) ;
une portion de transmission de données (24) pour transmettre lesdites données impulsionnelles modulées audit bus (1) en unités prédéterminées ;
une portion de réception (34) pour recevoir lesdites données impulsionnelles modulées transmises audit bus (1) ; et
une portion d'inversion de données (32) pour inverser lesdites données impulsionnelles modulées en données de contrôle originales,
**caractérisé en ce que** les dites données de contrôle sont des données codées selon la méthode de non-retour à zéro (NRZ) et lesdites données impulsionnelles modulées sont obtenues à partir des données de contrôle de telle sorte qu'elles deviennent une impulsion ayant une longue largeur d'impulsion dans le cas où un signal de contrôle passe de « 1 à « 0 » ou inversement, et de telle sorte que, dans le cas où une chaîne de bits du signal de contrôle est continue comme la configuration binaire de « 1 » ou « 0 », elle devienne une impulsion ayant une largeur d'impulsion courte et qu'en outre elle devienne une rangée d'impulsions inversées à chaque bit du signal de contrôle original.

3. Système de communication multiplexé selon la revendication 1 ou 2; dans lequel la longue largeur d'impulsion est deux fois plus grande que la largeur d'impulsion courte.
